# EUROPÄISCHE PATENTANMELDUNG

(11) **EP 1 760 575 A2**
(43) Veröffentlichungstag der Anmeldung: **07.03.2007**
(21) Anmeldenummer: 06017990.0
(22) Anmeldetag: 29.08.2006
(51) Int. Cl.: G06F 3/048

(54) **Verfahren zum Handhaben und Darstellen von Informationsdaten in/auf einem Endgerät, Endgerät sowie System zum Handhaben von Informationsdaten**

(30) Priorität: 31.08.2005 DE 102005041361
(71) Anmelder: Vodafone Holding GmbH, 40213 Düsseldorf (DE)
(72) Erfinder: Fehnert, Ben, London SW9 9TD (GB); Foley, Peter, St.Albans AL3 5LG (GB)
(74) Vertreter: Müller, Thomas

(57) **Zusammenfassung**

Es wird unter anderem ein Verfahren zum Handhaben und Darstellen von Informationsdaten in/auf einem Endgerät beschrieben, bei dem Informationsdaten in einer Speichereinrichtung des Endgeräts abgespeichert werden, bei dem Informationsdaten über wenigstens eine Schnittstelle zwischen einem Kommunikationsnetzwerk und dem Endgerät übertragen werden, bei dem im Endgerät eine Daten-Menüstruktur mit wenigstens einer Menüdatei implementiert ist, bei dem die Informationsdaten und/oder die Daten-Menüstruktur auf einer Anzeigeeinrichtung (10) des Endgeräts angezeigt wird/werden, bei dem innerhalb der Daten-Menüstruktur über Navigationsmittel (15) navigiert werden kann und bei dem die Informationsdaten in der wenigstens einen Menüdatei abgelegt werden/sind, wobei jeweils in einer Menüdatei abgelegte Informationsdaten einen Bezug zueinander aufweisen. Zur Vereinfachung der Handhabung ist vorgesehen, dass für wenigstens eine Menüdatei (C) innerhalb der Daten-Menüstruktur zwei oder mehr Menüdatei-Unterstrukturen (20, 30) erzeugt werden und dass in den Menüdatei-Unterstrukturen (20, 30) jeweils unterschiedliche Typen von Informationsdaten abgelegt werden. Weiterhin werden ein verbessertes Endgerät sowie ein verbessertes System zum Handhaben von Informationsdaten beschrieben.

## Beschreibung

Die vorliegende Erfindung betrifft zunächst ein Verfahren zum Handhaben von Informationsdaten in/auf einem Endgerät gemäß dem Oberbegriff von Patentanspruch 1. Weiterhin betrifft die Erfindung ein Endgerät für die Verwendung in einem Kommunikationsnetzwerk gemäß dem Oberbegriff von Patentanspruch 7. Schließlich betrifft die Erfindung auch ein System zum Handhaben von Informationsdaten.

Derartige Verfahren finden beispielsweise Anwendung im Zusammenhang mit der Mobilfunktechnologie. In einem solchen Fall handelt es sich bei dem Kommunikationsnetzwerk um ein Mobilfunknetz und bei den Endgeräten in aller Regel um Mobiltelefone.

In den letzten Jahren hat sich die Bandbreite an Möglichkeiten, Anwendungen und Diensten für Mobiltelefone erheblich vergrößert. War es ursprünglich nur möglich, mittels der Mobiltelefone zu telefonieren oder Nachrichten in Form von SMS (Short Message Service) auszutauschen, sind mittlerweile auch Internet basierte Anwendungen mit Mobiltelefonen möglich. Dazu sind internettaugliche Mobiltelefone entwickelt worden. Auch das Angebot der Betreiber von Kommunikationsnetzwerken hat sich verändert und erweitert. Nunmehr werden von den Netzbetreibern auch Internetplattformen, Internetdienste, Internetservices und dergleichen angeboten, die mittels eines internetfähigen Mobiltelefons genutzt werden können.

Bisher sind die einzelnen Anwendungen in den derzeit verfügbaren internetfähigen Mobiltelefonen jedoch noch aufgesplittert. Auf der einen Seite gibt es zunächst die Anzeigeeinrichtung des Mobiltelefons, bei der es sich in der Regel um einen Bildschirm, ein Display oder dergleichen handelt. Informationsdaten, die auf das Mobiltelefon übertragen werden, werden in einer Speichereinrichtung abgespeichert.

Um mit dem Kommunikationsnetzwerk, beziehungsweise einer diesem Netzwerk zugeordneten zentralen Rechnereinheit kommunizieren zu können, ist in der Regel eine geeignete Schnittstelle vorgesehen, über die auch Daten zwischen dem Endgerät und dem Kommunikationsnetzwerk ausgetauscht werden können.

Das Mobiltelefon verfügt bisher über eine Standard-Daten-Menüstruktur, in der die einzelnen für den Betrieb des Mobiltelefons erforderlichen Daten in einzelnen, separaten Menüdateien abgelegt sind. Über Navigationsmittel kann der Nutzer durch diese Daten-Menüstruktur hindurch navigieren.

Weiterhin ist es bekannt, dass der Netzwerkbetreiber ein Internetmenü oder Internetportal vorsieht, in welchem er seine angebotenen Internetinhalte implementiert und anbietet.

Problematisch bei den im allgemeinen Stand der Technik bekannten Lösungen ist jedoch, dass die einzelnen Daten-Menüstrukturen unabhängig, zumindest aber nur bedingt kompatibel zueinander, ausgebildet sind.

Will der Nutzer Internetinhalte aktivieren oder begutachten, muss er erst eine Verbindung zu einem entsprechenden Internetportal des Netzwerkbetreibers herstellen, um dort auf die Inhalte zugreifen zu können. Deshalb existiert für solche Online-Inhalte bisher nur ein geringes Bewusstsein auf Seiten der Nutzer. Weiterhin ist das Navigieren durch solche Online-Inhalte oftmals sehr unkomfortabel, was beispielsweise mit Einschränkungen auf Seiten des Browser-Werkzeugs oder dergleichen zusammenhängt. Weiterhin sind die derzeit zur Verfügung stehenden Links zu den Online-Inhalten eines Internetportals unattraktiv und stellen auf Seiten der Nutzer eine Barriere bezüglich der Entdeckung von Online-Inhalten dar.

Der vorliegenden Erfindung liegt die Aufgabe zugrunde, ein Verfahren, ein Endgerät sowie ein System der eingangs genannten Art derart weiterzubilden, dass die weiter oben beschriebenen Nachteile vermieden werden können. Insbesondere soll die Handhabung und Darstellung von Informationsdaten in/auf einem Endgerät innerhalb eines Kommunikationsnetzwerks, insbesondere das Navigieren in Daten-Menüstrukturen, vereinfacht werden.

Diese Aufgabe wird erfindungsgemäß gelöst durch das Verfahren mit den Merkmalen gemäß dem unabhängigen Patentanspruch 1, das Endgerät mit den Merkmalen gemäß dem unabhängigen Patentanspruch 7 sowie das System mit den Merkmalen gemäß dem unabhängigen Patentanspruch 13. Weitere Vorteile, Merkmale und Details der Erfindung ergeben sich aus den Unteransprüchen, der Beschreibung sowie den Zeichnungen. Merkmale und Details, die im Zusammenhang mit dem erfindungsgemäßen Verfahren beschrieben sind, gelten dabei selbstverständlich auch im Zusammenhang mit dem erfindungsgemäßen Endgerät sowie dem erfindungsgemäßen System. Weiterhin gelten Merkmale und Details, die im Zusammenhang mit dem erfindungsgemäßen Endgerät beschrieben sind, selbstverständlich auch im Zusammenhang mit dem erfindungsgemäßen Verfahren sowie dem erfindungsgemäßen System. Schließlich gelten Merkmale und Details, die im Zusammenhang mit dem erfindungsgemäßen System beschrieben sind, selbstverständlich auch im Zusammenhang mit dem erfindungsgemäßen Endgerät sowie dem erfindungsgemäßen Verfahren.

Gemäß dem ersten Aspekt der Erfindung wird eine Verfahren zum Handhaben und Darstellen von Informationsdaten in/auf einem Endgerät bereitgestellt, bei dem Informationsdaten in einer Speichereinrichtung des Endgeräts abgespeichert werden, bei dem Informationsdaten über wenigstens eine Schnittstelle zwischen einem Kommunikationsnetzwerk und dem Endgerät übertragen werden, bei dem im Endgerät eine Daten-Menüstruktur mit wenigstens einer Menüdatei implementiert ist, bei dem die Informationsdaten und/oder die Daten-Menüstruktur auf einer Anzeigeeinrichtung des Endgeräts angezeigt wird/werden, bei dem innerhalb der Daten-Menüstruktur über Navigationsmittel navigiert werden kann und bei dem die Informationsdaten in der wenigstens einen Menüdatei abgelegt werden/sind, wobei jeweils in einer Menüdatei abgelegte Informationsdaten einen Bezug zueinander aufweisen. Erfindungsgemäß ist vorgesehen, dass für wenigstens eine Menüdatei innerhalb der Daten-Menüstruktur zwei oder mehr Menüdatei-Unterstrukturen erzeugt werden und dass in den Menüdatei-Unterstrukturen jeweils unterschiedliche Typen von Informationsdaten abgelegt werden.

Das Verfahren ermöglicht die einfache, komfortable Handhabung von Informationsdaten in/auf einem Endgerät. Bei den Informationsdaten handelt es sich generell um Daten, die dem Adressaten eine Information bereitstellen. Beispielsweise kann es sich bei den Informationsdaten um Daten mit bestimmten Inhalten, so genannte Inhaltsdaten (Content Data), handeln. Die vorliegende Erfindung ist nicht auf bestimmte Typen von Informationsdaten beschränkt. Beispielsweise kann es sich bei den Informationsdaten um einzelne Daten, Datenpakete, Programmdaten, Programme, Textdaten, Bilddaten, Links, Audiodaten, Videodaten und dergleichen, sowie um beliebige Kombinationen daraus, handeln. Einige nicht ausschließliche Beispiele hierzu werden im weiteren Verlauf der Beschreibung noch näher erläutert.

Die Informationsdaten werden temporär oder dauerhaft in einer Speichereinrichtung des Endgeräts abgespeichert. Bei der Speichereinrichtung kann es sich beispielsweise um eine separate Speichereinrichtung handeln, auf die die Rechnerkomponenten innerhalb des Endgeräts zugreifen. Die Speichereinrichtung kann beispielsweise auch auf einer Chip-Karte, beispielsweise einer so genannten SIM-Karte (Subscriber Identity Module) oder dergleichen untergebracht sein. Art und Größe der Speichereinrichtung hängen insbesondere von der Art und dem Umfang der zu speichernden Informationsdaten ab, so dass auch andere Typen und Anordnungen von Speichereinrichtungen möglich sind.

Die Informationsdaten werden über eine geeignete Schnittstelle zwischen einem Kommunikationsnetzwerk und dem entsprechenden Endgerät übertragen. Dabei ist die Erfindung nicht auf bestimmte Typen von Kommunikationsnetzwerken und Endgeräten beschränkt. Nicht ausschließliche Beispiele werden im weiteren Verlauf der Beschreibung näher erläutert.

In dem Endgerät selbst ist eine Daten-Menüstruktur implementiert, die wenigstens eine Menüdatei aufweist. Die Daten-Menüstruktur zeigt dabei Optionen zur Auswahl von Menüdateien an. Die Daten-Menüstruktur kann - je nach Komplexität - horizontal und/oder vertikal verzweigt sein, so dass eine Daten-Menüstruktur insbesondere, bei vertikaler Verzweigung, eine hierarchische Struktur aufweisen kann. In der Daten-Menüstruktur ist wenigstens eine Menüdatei implementiert, wobei vorzugsweise natürlich auch zwei oder mehrere Menüdateien vorgesehen sein können. Jede Menüdatei hat vorzugsweise einen bestimmten thematischen Fokus, so dass unterschiedliche Menüdateien unterschiedliche Themen betreffen und beinhalten. Die einzelnen Menüdateien der Daten-Menüstruktur werden vorteilhaft in einer oder mehreren Menüleisten auf/im Endgerät angezeigt oder dargestellt.

Innerhalb der einzelnen Menüdateien befinden sich die Informationsdaten. Eine Menüdatei stellt insofern eine Sammlung von Informationsdaten dar.

Die Darstellung der Informationsdaten und/oder der Daten-Menüstruktur und/oder der Menüdateien und/oder der Menüleisten erfolgt vorzugsweise auf einer geeigneten Anzeigeeinrichtung des Endgeräts, wobei die Erfindung nicht auf bestimmte Typen von Anzeigeeinrichtungen beschränkt ist. Je nach Ausgestaltung des Endgeräts kann es sich bei der Anzeigeeinrichtung beispielsweise um einen Bildschirm, ein Display oder dergleichen handeln.

Um eine Navigation innerhalb der Daten-Menüstruktur oder innerhalb der Menüdateien zu ermöglichen, sind geeignete Navigationsmittel vorgesehen. Hierbei kann es sich beispielsweise um Hardware-Lösungen, wie etwa Knöpfe, Schalter, Buttons, Navigations-Sticks, Navigationsräder und dergleichen handeln. Natürlich sind auch Software-Lösungen denkbar, beispielsweise in Form von interaktiven Schaltflächen, Links und dergleichen. Die Erfindung ist nicht auf bestimmte Typen von Navigationsmitteln beschränkt.

Ein grundlegendes Merkmal der vorliegenden Erfindung besteht darin, dass die Informationsdaten in der wenigstens einen Menüdatei abgelegt werden/sind. Dabei erfolgt das Ablegen beziehungsweise Abspeichern der Informationsdaten nicht wahllos. Vielmehr werden immer solche Informationsdaten in einer Menüdatei abgelegt, die einen Bezug zueinander aufweisen. Insbesondere werden in einer Menüdatei immer solche Informationsdaten abgelegt, die einen Bezug zur Thematik der jeweiligen Menüdatei aufweisen. Dabei ist die Erfindung nicht auf bestimmte Typen von Bezügen, die die Informationsdaten zueinander aufweisen, beschränkt. Beispielsweise kann es sich hierbei um thematische Bezüge, um Bezüge bezüglich des Datentyps und/oder der Datenstruktur, um Bezüge bezüglich der Datenmenge und dergleichen handeln.

Erfindungsgemäß ist nun vorgesehen, dass für wenigstens eine Menüdatei innerhalb der Daten-Menüstruktur zwei oder mehr Menüdatei-Unterstrukturen erzeugt werden. In den Menüdatei-Unterstrukturen werden jeweils unterschiedliche Typen von Informationsdaten abgelegt. Gemäß der vorliegenden Erfindung findet nunmehr eine weitere Aufteilung der Informationsdaten innerhalb der Menüdateien statt. Eine oder mehrere der Menüdateien sind so ausgebildet, dass sie jeweils über zwei oder mehr Menüdatei-Unterstrukturen verfügen. Da in einer Menüdatei jeweils Informationsdaten abgelegt sind, die bereits einen Bezug zueinander aufweisen, kann durch die Erzeugung von Menüdatei-Unterstrukturen nunmehr erreicht werden, dass die in Bezug zueinander stehenden Informationsdaten noch weiter und genauer unterteilt werden können. Dabei ist die Erfindung nicht auf bestimmte Arten der Aufteilung beschränkt.

Gemäß einem vorteilhaften, jedoch nicht ausschließlichen Beispiel kann vorgesehen sein, dass die Informationsdaten nach so genannten Online-Daten und Offline-Daten unterteilt werden, wobei in einer Menüdatei-Unterstruktur dann die als Online-Daten ausgebildeten Informationsdaten abgelegt sind, wohingegen in einer anderen Menüdatei-Unterstruktur die als Offline-Daten ausgebildeten Informationsdaten abgelegt sind. Ein solches Beispiel, anhand dessen die generelle Funktionsweise der Erfindung erläutert werden soll, wird im weiteren Verlauf der Beschreibung des Öfteren näher erläutert, wobei es für einen Fachmann selbstverständlich ist, dass die Erfindung nicht auf dieses eine konkrete Beispiel beschränkt ist und dass der Grundgedanke der vorliegenden Erfindung auch auf andere Anwendungsgebiete übertragen werden kann.

Vorteilhaft kann über geeignete Schaltmittel zwischen den einzelnen Menüdatei-Unterstrukturen einer Menüdatei hin und her geschaltet werden. Hierbei kann es sich beispielsweise um Hardware-Lösungen, wie etwa Knöpfe, Schalter, Buttons, Umschalt-Sticks, Umschalträder und dergleichen handeln. Natürlich sind auch Software-Lösungen denkbar, beispielsweise in Form von interaktiven Schaltflächen, Links und dergleichen. Die Erfindung ist nicht auf bestimmte Typen von Schaltmitteln beschränkt.

Nachfolgend werden einige nicht ausschließliche Beispiele beschrieben, wie eine Menü-Datenstruktur vorteilhaft ausgestaltet sein kann. Vorteilhaft umfasst eine solche Menü-Datenstruktur eine erste Menüleiste, in welcher wenigstens ein Zugangstoken zu der wenigstens einen Menüdatei und/oder den Menüdatei-Unterstrukturen wenigstens einer Menüdatei implementiert ist. Bei einem Zugangstoken handelt es sich generell um ein Aktivierungsmittel, beispielsweise in Form einer interaktiven Schaltfläche, eines Links oder dergleichen, über dessen Aktivierung in eine damit verknüpfte Menüdatei beziehungsweise in die Menüdatei-Unterstrukturen verzweigt wird. Die Verwendung derartiger Zugangstoken in einer Menüleiste, über deren Aktivierung in eine Menüdatei verzweigt werden kann, ist an sich bereits bekannt, so dass sich eine vertiefende Erläuterung an dieser Stelle erübrigt.

In weiterer Ausgestaltung kann vorteilhaft vorgesehen sein, dass über eine Aktivierung eines Zugangstokens für eine Menüdatei in eine zweite Menüleiste der Menü-Datenstruktur verzweigt wird, die einer bestimmten Menüdatei zugeordnet ist und in der Zugangstoken zu den Menüdatei-Unterstrukturen der Menüdatei implementiert sind, wobei über eine Aktivierung dieser Zuganstoken in die entsprechenden Menüdatei-Unterstrukturen verzweigt wird.

Vorteilhaft ist vorgesehen, dass bei Auswahl einer Menüdatei-Unterstruktur die darin abgelegten Informationsdaten auf der Anzeigeeinrichtung des Endgeräts angezeigt werden.

Nachfolgend werden einige nicht ausschließliche Beispiele beschrieben, wie die Informationsdaten vorteilhaft ausgebildet sein können.

Vorteilhaft kann vorgesehen sein, dass in einer ersten Menüdatei-Unterstruktur der Menüdatei Informationsdaten abgelegt werden, die in einer Speichereinrichtung des Endgeräts abgespeichert sind. Hierbei handelt es sich dann um so genannte Offline-Daten. Die Daten sind auf dem Endgerät gespeichert und können ohne eine aktive Verbindung des Endgeräts zum Kommunikationsnetzwerk genutzt werden. Die Speicherung der Daten kann in einer separaten Speichereinrichtung des Endgeräts, auf einer Chip-Karte des Endgeräts, beispielsweise einer SIM-Karte, oder dergleichen erfolgen. Die Auswahl der geeigneten Speichereinrichtung richtet sich in erster Linie nach Art und Umfang der zu speichernden Daten.

Vorzugsweise können die Informationsdaten mit Aktivierungsmitteln verknüpft sein, wobei bei Auswahl einer Menüdatei-Unterstruktur die Aktivierungsmittel auf der Anzeigeeinrichtung des Endgeräts dargestellt werden und wobei bei Betätigung der Aktivierungsmittel die dazugehörigen Informationsdaten aktiviert werden. Eine solche Vorgehensweise bietet sich beispielsweise dann an, wenn die Informationsdaten an sich in Form größerer Datenpakte, von Programmen oder dergleichen vorliegen, oder wenn beispielsweise eine große Menge von Informationsdaten vorhanden ist. Die Verwendung derartiger Aktivierungsmittel, bei denen es sich beispielsweise um so genannte Links handeln kann, hat den Vorteil, dass auf einer relativ kleinen Fläche eine große Menge an Datenangebot für den Nutzer bereitgestellt werden kann. Bei der Betätigung eines Aktivierungsmittels wird dann automatisch zu den damit verknüpften Informationsdaten verzweigt.

In weiterer Ausgestaltung kann vorgesehen sein, dass in einer zweiten Menüdatei-Unterstruktur der Menüdatei Informationsdaten abgelegt werden, die vom Kommunikationsnetzwerk über die wenigstens eine Schnittstelle auf das Endgerät übertragen werden. Hierbei handelt es sich dann um so genannte Online-Daten, die im Kommunikationsnetzwerk bereitgestellt und auf das/die Endgerät(e) übertragen werden. Je nach Kommunikationsnetzwerktyp kann die Übertragung der Daten leitungsgebunden oder "Over The Air (OTA)", beispielsweise mittels Funk oder dergleichen, erfolgen. Dazu kommuniziert das Endgerät über eine geeignete Schnittstelle mit dem Kommunikationsnetzwerk, beispielsweise mit einer zentralen Rechnereinheit innerhalb des Netzwerks. Die zentrale Rechnereinheit kann aus einem oder mehreren Rechnern bestehen, beispielsweise einem Server oder einer Servereinrichtung. Das Endgerät wird über die Schnittstelle zumindest zeitweilig mit der zentralen Rechnereinheit verbunden, so dass die Informationsdaten von dort auf das Endgerät übertragen (gedownloaded) werden können. Vorteilhaft werden die Informationsdaten in einem solchen Fall als so genannte "Push-Daten" vom Kommunikationsnetzwerk zum Endgerät übertragen.

In dem wie vorstehend beschriebenen Beispiel kann also vorgesehen sein, dass eine Menüdatei vorgesehen ist, in der Informationsdaten abgelegt sind, die alle in einem bestimmten Bezug zueinander stehen. Nun weist die Menüdatei zwei oder mehr Menüdatei-Unterstrukturen auf, wobei in einer der Unterstrukturen beispielsweise Informationsdaten in Form von Offline-Daten, und in der anderen Unterstruktur beispielsweise Informationsdaten in Form von Online-Daten abgespeichert sind. Der Nutzer kann nun innerhalb der Menüdatei hin und her schalten, um sich auf seiner Anzeigeeinrichtung im Endgerät entweder offline gespeicherte Inhalte oder Online-Inhalte anzeigen zu lassen. Dadurch wird es ihm erleichtert, auch Bereiche mit Online-Inhalten kennen zu lernen.

Durch das erfindungsgemäße Verfahren wird es folglich ermöglicht, dass Online-Inhalte auf einfache Weise in die Menü-Datenstruktur integriert werden. Der Nutzer kann auf einfache und bequeme Weise Online-Inhalte innerhalb der Menü-Dateistruktur entdecken und nutzen, wobei der Nutzer diese Online-Inhalte stets in Bezug zu einer bestimmten Menüdatei vorfindet. Es ist für ihn nicht mehr erforderlich, zu speziellen, separaten Internetportalen des Netzbetreibers zu gehen, wie dies als nachteilig in der Beschreibungseinleitung geschildert worden ist.

Vorteilhaft werden die Informationsdaten in Form von Online-Daten netzwerkseitig dynamisiert übertragen. Das bedeutet, dass der Netzwerkbetreiber kontrollieren kann, welche Art von Online-Daten wo und wann präsentiert wird.

Vorteilhaft können die netzwerkseitig übertragenen Informationsdaten in Form von Broadcastdaten und/oder in Form von Interaktionsdaten und/oder in Form von Aktivierungsdaten und/oder in Form von Inhaltsdaten und/oder in Form einer Kombination von Inhaltsdaten und Aktivierungsdaten und/oder in Form von Anwendungsdaten und/oder in Form einer Kombination von Anwendungsdaten und Aktivierungsdaten auf das Endgerät übertragen werden. Natürlich können auch noch andere Arten von Informationsdaten, oder aber die vorstehend genannten Informationsdaten in jeder beliebigen Kombination übertragen werden.

Nachfolgend werden einige nicht ausschließliche Beispiele beschrieben, in welcher Form Informationsdaten netzwerkseitig übertragen werden könnten. So könnte etwa vorgesehen sein, dass die Online-Inhalte in Form eines dynamisch übertragenen Links übertragen werden. In einem solchen Fall könnte beispielsweise nur der Link dynamisch zum Endgerät übertragen werden, beispielsweise "Spiel der Woche: XXXX" in Woche 1, "Spiel der Woche: YYYY" in Woche 2 und so weiter. Es wäre auch möglich, vorab einen gekürzten Inhalt zu übertragen, möglicherweise in Verbindung mit einem vorstehend beschriebenen Link. So könnte man beispielsweise eine kurze Beschreibung - etwa mit Abbildungen - zu einem Spiel schicken, das über die Aktivierung des mit übertragenen Links gleich gespielt oder herunter geladen werden kann. Man könnte auf diese Weise auch Kurzversionen von Musikstücken und dergleichen übertragen. Ebenso wäre es möglich, gleich auch den kompletten Online-Inhalt an sich zum Endgerät zu übertragen. Der Nutzer muss dann nur noch den Online-Inhalt kaufen, aktivieren und dergleichen, um diesen nutzen zu können.

Vorteilhaft kann vorgesehen sein, dass wenigstens eine Menüdatei und/oder wenigstens eine Menüdatei-Unterstruktur Mittel zur Selektion der vom Kommunikationsnetzwerk auf das Endgerät übertragenen Informationsdaten aufweist und dass bei, nach oder ab Aktivierung der Selektionsmittel nur eine der Selektion entsprechende Untermenge der Informationsdaten auf das Endgerät übertragen wird. Damit kann der Nutzer die netzwerkseitig übertragenen Informationsdaten (Online-Daten) nach seinem eigenen Willen bestimmen, beispielsweise in Größe, Form, Menge, Thema und dergleichen. Wenn sich der Nutzer beispielsweise für Sport interessiert und Online-Daten über Sport übertragen bekommen möchte, kann er auf diese Weise eine weitere Selektion vornehmen. Beispielsweise könnte es sein, dass sich der Nutzer auf dem Sportgebiet nur für Fußball interessiert. Durch eine Selektion kann er nun erreichen, dass ihm nur noch Informationsdaten zum Thema Fußball vom Netzwerk online bereitgestellt werden.

Wenn der Nutzer beispielsweise eine Menüdatei "Meine Spiele" auf seinem Endgerät implementiert hat, könnte eine Menüdatei-Unterstruktur beispielsweise im Endgerät abgespeicherte Spiele auflisten (Offline-Daten), während eine andere Menüdatei-Unterstruktur eine Liste mit netzwerkseitig übertragenen Links zu Online-Inhalten (Online-Daten) beinhaltet. Über geeignete Selektionsmittel, beispielsweise einen Knopf, eine interaktive Schaltfläche oder dergleichen, könnte der Nutzer nun auswählen, an welcher Art von Spielen er interessiert ist. Der Nutzer wird nach entsprechender Auswahl netzwerkseitig dann nur noch Informationsdaten übertragen bekommen, die seiner zuvor getroffenen Selektion entsprechen.

In weiterer Ausgestaltung kann vorgesehen sein, dass vom Kommunikationsnetzwerk mittels eines Abfrageverfahrens auf dem Endgerät automatisch geprüft wird, welche Informationsdaten in der Speichereinrichtung des Endgeräts abgespeichert sind (Offline-Daten), und dass anschließend nur solche Informationsdaten vom Kommunikationsnetzwerk auf das Endgerät übertragen werden (Online-Daten) die einen bestimmten Bezug zu den bereits abgespeicherten Informationsdaten aufweisen. Damit kann der Netzwerkbetreiber feststellen, welche Vorlieben der Nutzer in Bezug auf die Informationsdaten hat. Er kann dem Nutzer dann ganz gezielt Angebote für Online-Daten bereitstellen, die in das Portfolio an Informationsdaten des Nutzers passen.

Das wie vorstehend beschriebene erfindungsgemäße Verfahren weist eine ganze Reihe von Vorteilen auf, die anhand einiger konkreter, nicht ausschließlicher Beispiele im Folgenden noch einmal verdeutlicht werden.

Ein grundlegender Vorteil besteht darin, dass es in der Daten-Menüstruktur für die Menüdateien nunmehr separate Menüdatei-Unterstrukturen gibt, beispielsweise für Online-Inhalte und für Offline-Inhalte, wobei die in den einzelnen Menüdatei-Unterstrukturen abgelegten Informationsdaten immer noch einen übergeordneten Bezug zueinander aufweisen. In den einzelnen Menüdateibereichen des Endgeräts, beispielsweise eines Mobiltelefons, wie etwa den Menüdateien "Meine Spiele", "Meine Bilder", "Meine Klingeltöne" und dergleichen, oder aber Medienapplikationen, wie beispielsweise "Media Player", "TV Player", "Interaktive Musik Unterhaltung" und dergleichen, existieren beispielsweise zwei unterschiedliche Bereiche in Form von Menüdatei-Unterstrukturen. In einer Menüdatei-Unterstruktur werden im Endgerät gespeicherte Offline-Inhalte abgelegt und angezeigt, während in einer anderen Menüdatei-Unterstruktur Links zu Online-Inhalten angezeigt werden. Der Nutzer kann zwischen den gespeicherten Inhalten und den Online-Links hin und her navigieren und mit den jeweils dargestellten Inhalten interagieren.

Zusätzlich oder alternativ kann vorgesehen sein, dass der Nutzer über eine Menüdatei-Unterstruktur Zugang zu dynamischen Links zu Online-Inhalten erhält, wobei diese Links in der jeweiligen Menüdatei-Unterstruktur abgespeichert sind. Wenn der Nutzer auf seinem Endgerät nun zu einer Menüdatei navigiert, sieht er im Zusammenhang mit dieser Menüdatei zwei oder mehr Menüdatei-Unterstrukturen. Aus einer Menüdatei-Unterstruktur kann er beispielsweise die existierende Liste von im Endgerät gespeicherten Inhalten (Offline-Daten) selektieren. Über eine andere Menüdatei-Unterstruktur kann er beispielsweise Zugriff nehmen auf dynamisch aktualisierte Online-Links zu Informationsdaten, beispielsweise die 10 Top-Spiele des Monats, oder dergleichen. Um die mit dem Link verknüpften Inhalt kaufen und/oder herunter laden zu können, muss der Nutzer Online gehen. Dazu muss er aber nur noch den entsprechenden Link aktivieren, ohne separat dazu einen Browser öffnen oder zu einem bestimmten Internetportal gehen zu müssen. Die netzwerkseitig übertragenen Online-Links können netzwerkseitig dynamisch aktualisiert werden. Die Links werden vorteilhaft "Over The Air (OTA)" zu den Endgeräten übertragen.

Beispielsweise kann auch vorgesehen sein, dass dem Nutzer netzwerkseitig Informationsdaten (Online-Daten) in Form von Vorabversionen von Inhalten übertragen werden, die dann in der entsprechenden Menüdatei-Unterstruktur abgelegt werden. Zusätzlich zu diesen Informationen kann dann noch ein wie vorstehend beschriebener Link mit übertragen werden. Wenn der Nutzer beispielsweise eine Menüdatei-Unterstruktur aktiviert, in der Informationsdaten in Form netzwerkseitig übertragener Online-Daten abgelegt sind, wird dem Nutzer eine Kurzbeschreibung, eine Vorschau-Version oder dergleichen des Online-Inhalts präsentiert. Der Nutzer kann sich diese Informationen auf seinem Endgerät ansehen, ohne dabei Online gehen zu müssen. Wenn er den kompletten Inhalt in Form entsprechender Informationsdaten kaufen beziehungsweise auf sein Endgerät herunterladen möchte, kann dies beispielsweise über einen entsprechenden Link geschehen, der zusammen mit den übrigen Informationsdaten übertragen worden ist.

Ebenso kann auch vorgesehen sein, dass dem Nutzer netzwerkseitig Informationsdaten übertragen werden, die bereits den gesamten Inhalt der Informationsdaten umfassen. Wenn der Nutzer beispielsweise eine Menüdatei-Unterstruktur aktiviert, in der Informationsdaten in Form derartiger netzwerkseitig übertragener Online-Inhalte abgelegt sind, hat der Nutzer bereits Zugang zu den Informationsdaten in deren Gesamtheit, ohne dass er diese über einen zusätzlichen Link oder dergleichen herunterladen müsste. Wenn es sich bei den Informationsdaten um kostenpflichtige Inhalte handelt, kann vorgesehen sein, dass der Nutzer erst Online gehen muss, um die Inhalte zu kaufen, zu aktivieren, frei zu schalten oder dergleichen.

Vorteilhaft kann vorgesehen sein, dass der Kauf und das Herunterladen von Informationsdaten außerhalb des eigentlichen Internetportals erfolgt, was die Handhabung des Endgeräts weiter vereinfacht. Hierzu können geeignete Software-Plattformen auf dem jeweiligen Endgerät implementiert werden, die derartige Aktivitäten ermöglichen.

Gemäß einem weiteren Aspekt der Erfindung wird ein Endgerät für die Verwendung mit einem Kommunikationsnetzwerk bereitgestellt, mit einer Anzeigeeinrichtung, einer Speichereinrichtung zum Abspeichern von Informationsdaten und mit wenigstens einer Schnittstelle zum Übertragen von Informationsdaten zwischen einem Kommunikationsnetzwerk und dem Endgerät, wobei im Endgerät eine Daten-Menüstruktur mit wenigstens einer Menüdatei implementiert ist, wobei die Informationsdaten in der wenigstens einen Menüdatei abgespeichert sind, wobei jeweils in einer Menüdatei abgelegte Informationsdaten einen Bezug zueinander aufweisen und wobei Mittel zum Navigieren innerhalb der Daten-Menüstruktur vorgesehen sind. Das Endgerät ist erfindungsgemäß dadurch gekennzeichnet, dass wenigstens eine Menüdatei zwei oder mehr Menüdatei-Unterstrukturen aufweist und dass in den Menüdatei-Unterstrukturen jeweils unterschiedliche Informationsdatentypen abgelegt sind.

Vorteilhaft weist das Endgerät Mittel zur Durchführung des wie vorstehend beschriebenen erfindungsgemäßen Verfahrens auf, so dass zur Beschreibung des Endgeräts auch auf die entsprechenden Ausführungen zum erfindungsgemäßen Verfahren weiter oben vollinhaltlich Bezug genommen und verwiesen wird.

Vorteilhaft weist das Endgerät Mittel zum Hin- und Herschalten zwischen den Menüdatei-Unterstrukturen auf. Je nach Ausgestaltung des Endgeräts können diese Schaltmittel hardwaremäßig und/oder softwaremäßig realisiert sein.

Vorzugsweise kann die Menü-Datenstruktur eine erste Menüleiste umfassen, in welcher wenigstens ein Zugangstoken zur Verzweigung in die wenigstens eine Menüdatei und/oder in eine Menüdatei-Unterstruktur implementiert ist.

In weiterer Ausgestaltung kann die Menüdatei-Datenstruktur eine erste Menüleiste sowie wenigstens eine zweite, einer bestimmten Menüdatei zugeordnete Menüleiste umfassen, wobei in der ersten Menüleiste wenigstens ein Zugangstoken zur Verzweigung in eine einer Menüdatei zugeordneten zweiten Menüleiste implementiert ist und wobei in der zweiten Menüleiste wenigstens ein Zugangstoken zur Verzweigung in eine Menüdatei-Unterstruktur der Menüdatei implementiert ist.

Die Informationsdaten sind vorteilhaft auf der Anzeigeeinrichtung des Endgeräts dargestellt oder darstellbar.

Vorteilhaft ist vorgesehen, dass in einer ersten Menüdatei-Unterstruktur der Menüdatei Informationsdaten abgelegt sind, die in einer Speichereinrichtung des Endgeräts abgespeichert sind. Hierbei handelt es sich um so genannte Offline-Daten. Die Informationsdaten können beispielsweise mit Aktivierungsmitteln verknüpft sein, wobei die Aktivierungsmittel auf der Anzeigeeinrichtung des Endgeräts dargestellt sind oder darstellbar sind. Nach Betätigung der Aktivierungsmittel, beispielsweise eines entsprechenden Links, wird zu den eigentlichen Informationsdaten verzweigt, die anschließend auf der Anzeigeeinrichtung des Endgeräts angezeigt werden, oder im Falle von Programmen, auf dem Endgerät ablaufen.

In weiterer Ausgestaltung kann beispielsweise vorgesehen sein, dass in einer zweiten Menüdatei-Unterstruktur der Menüdatei vom Kommunikationsnetzwerk über die wenigstens eine Schnittstelle auf das Endgerät übertragene Informationsdaten abgelegt sind. Hierbei handelt es sich um so genannte Online-Daten.

Die vom Kommunikationsnetzwerk übertragenen Informationsdaten können vorteilhaft in Form von Broadcastdaten und/oder in Form von Interaktionsdaten und/oder in Form von Aktivierungsdaten und/oder in Form von Inhaltsdaten und/oder in Form einer Kombination von Inhaltsdaten und Aktivierungsdaten und/oder in Form von Anwendungsdaten und/oder in Form einer Kombination von Anwendungsdaten und Aktivierungsdaten ausgebildet sein, wobei natürlich auch noch andere Typen von Informationsdaten sowie beliebige Kombinationen der zuvor genannten Informationsdatentypen möglich sind.

Vorzugsweise kann die zweite Menüdatei-Unterstruktur Mittel zur Selektion der vom Kommunikationsnetzwerk auf das Endgerät übertragenen oder zu übertragenen Informationsdaten aufweisen.

Die vorliegende Erfindung ist nicht auf bestimmte Typen von Endgeräten beschränkt. Die Ausgestaltung der jeweiligen Endgeräte ergibt sich vielmehr jeweils aus der Art des verwendeten Kommunikationsnetzwerks. Beispielsweise kann das Endgerät als Mobiltelefon, als Personal Digital Assistant (PDA), als stationärer Rechner, als portabler Rechner und dergleichen ausgebildet sein, wobei diese Aufzählung natürlich nur exemplarischen Charakter hat.

Gemäß noch einem weiteren Aspekt der Erfindung wird ein System zum Handhaben von Informationsdaten bereitgestellt, mit einem Kommunikationsnetzwerk, wobei netzwerkseitig wenigstens eine zentrale Rechnereinheit vorgesehen ist, sowie mit wenigstens einem wie vorstehend beschriebenen erfindungsgemäßen Endgerät, wobei wenigstens eine Schnittstelle zur Übertragung von Daten zwischen der wenigstens einen zentralen Rechnereinheit und dem wenigstens einen Endgerät vorgesehen ist. Zur Beschreibung des erfindungsgemäßen Systems wird auch auf die entsprechenden Ausführungen zum erfindungsgemäßen Endgerät vollinhaltlich Bezug genommen und verwiesen.

Vorteilhaft weist das System Mittel zur Durchführung des wie weiter oben beschriebenen erfindungsgemäßen Verfahrens auf, so dass zur Beschreibung des Systems auch auf die entsprechenden Ausführungen weiter oben vollinhaltlich Bezug genommen und verwiesen wird.

Das System ist nicht auf eine bestimmte Anzahl von Endgeräten beschränkt. Ebenso ist das System nicht auf einen bestimmten Kommunikationsnetzwerktyp beschränkt. Gemäß einer bevorzugten Ausführungsform kann das Kommunikationsnetzwerk als Mobilfunknetz ausgebildet sein und/oder das Internet darstellen und/oder als Hybridnetzwerk aus Mobilfunknetz und Internet ausgebildet sein. In einem solchen Fall handelt es sich bei den Endgeräten vorteilhaft um Mobiltelefone.

Die Erfindung wird nun anhand eines Ausführungsbeispiels unter Bezugnahme auf die beiliegenden Zeichnungen näher erläutert. Es zeigen
- Figur 1: die schematische Darstellung einer Anzeigeeinrichtung eines Endgeräts, bei der in einer Ausgangsstellung verschiedene Menüdateien in einer Menüleiste dargestellt sind;
- Figur 2: eine schematische Darstellung einer Anzeigeeinrichtung eines Endgeräts, bei der aus einer Menüdatei gemäß Figur 1 in eine zu dieser Menüdatei gehörige erste Menüdatei-Unterstruktur verzweigt wurde; und
- Figur 3: eine schematische Darstellung einer Anzeigeeinrichtung eines Endgeräts, bei der aus einer Menüdatei gemäß Figur 1 in eine zu dieser Menüdatei gehörige zweite Menüdatei-Unterstruktur verzweigt wurde.

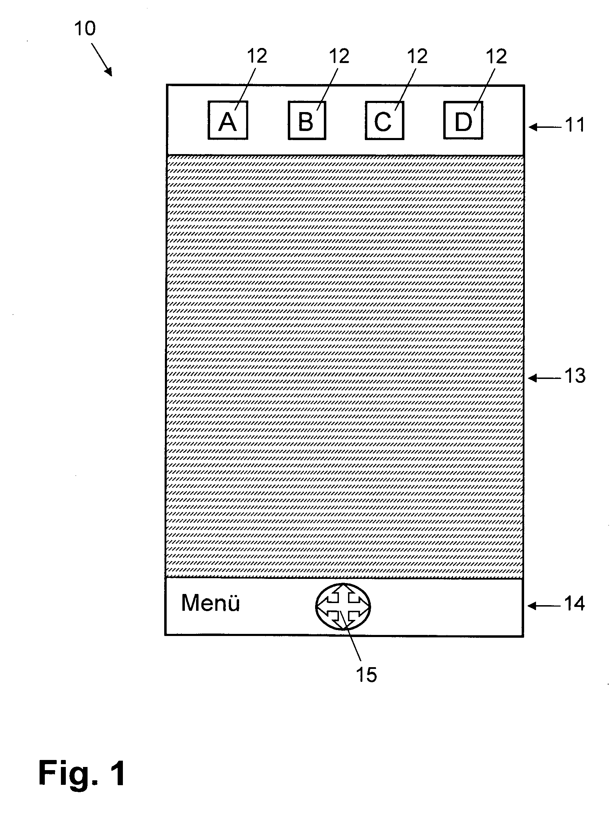

In den Figuren 1 bis 3 ist eine Anzeigeeinrichtung 10 dargestellt, die Bestandteil eines Endgeräts ist. Bei der Anzeigeeinrichtung 10 kann es sich um einen Bildschirm, ein Display und dergleichen handeln. Das Endgerät ist zur Verwendung in einem Kommunikationsnetzwerk ausgebildet. Im vorliegenden Beispiel handelt es sich bei dem Kommunikationsnetzwerk um ein Mobilfunknetz oder ein Hybridnetzwerk aus Mobilfunknetz und Internet. Bei den Endgeräten handelt es sich dann vorteilhaft um Mobiltelefone.

Gemäß Figur 1 weist die Anzeigeeinrichtung 10 des Endgeräts in ihrer Ausgangsstellung zunächst eine Darstellungsfläche 13 auf, auf der Daten und Applikationen jedweden Typs dargestellt werden können. Oberhalb der Darstellungsfläche 13 ist eine erste Menüleiste 11 vorgesehen, in welcher diverse Zugangstoken 12 zu verschiedenen Menüdateien A, B, C und D angeordnet beziehungsweise implementiert sind. Die Menüdateien sind Bestandteil einer Daten-Menüstruktur. Bei den Zugangstoken 12 handelt es sich vorteilhaft um interaktive Schaltflächen. Bei Aktivierung eines Zugangstokens 12 wir in die dahinter liegende Menüdatei verzweigt, wobei jede Menüdatei eine bestimmte Thematik umfasst.

Weiterhin ist auf der Anzeigeeinrichtung 10 unterhalb der Darstellungsfläche 13 eine Navigations-Menüleiste 14 vorgesehen. Mittels geeigneter Navigationsmittel 15, beispielsweise einem in allen Richtungen beweglichen Navigations-Stick, ist es möglich, innerhalb der Daten-Menüstruktur zu navigieren.

Nachfolgend wird der Ablauf des erfindungsgemäßen Verfahrens unter Verwendung eines vorstehend beschriebenen Endgeräts erläutert. Ausgangspunkt soll dabei sein, dass der Nutzer eine Menüdatei C auswählen und aktivieren will, bei der es sich beispielsweise um die Menüdatei "Meine Spiele" handeln kann.

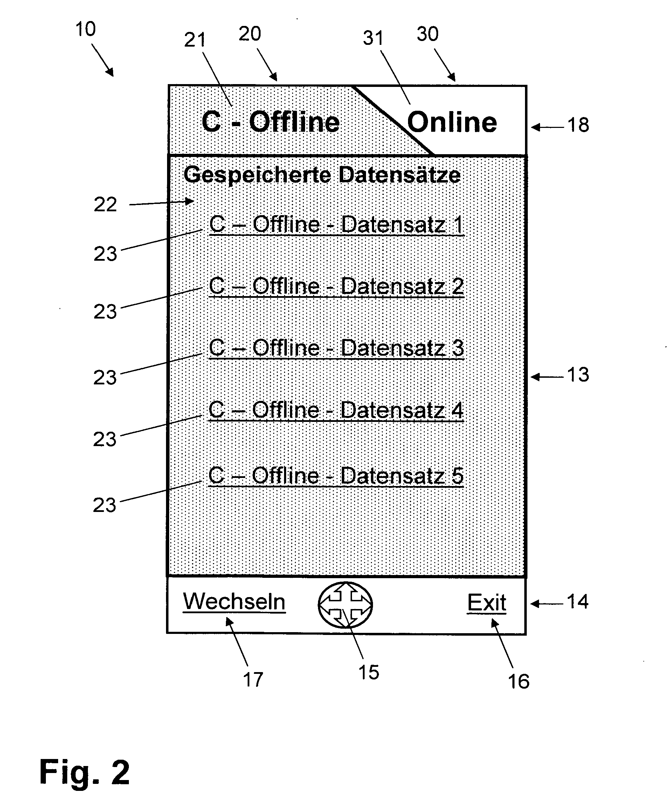

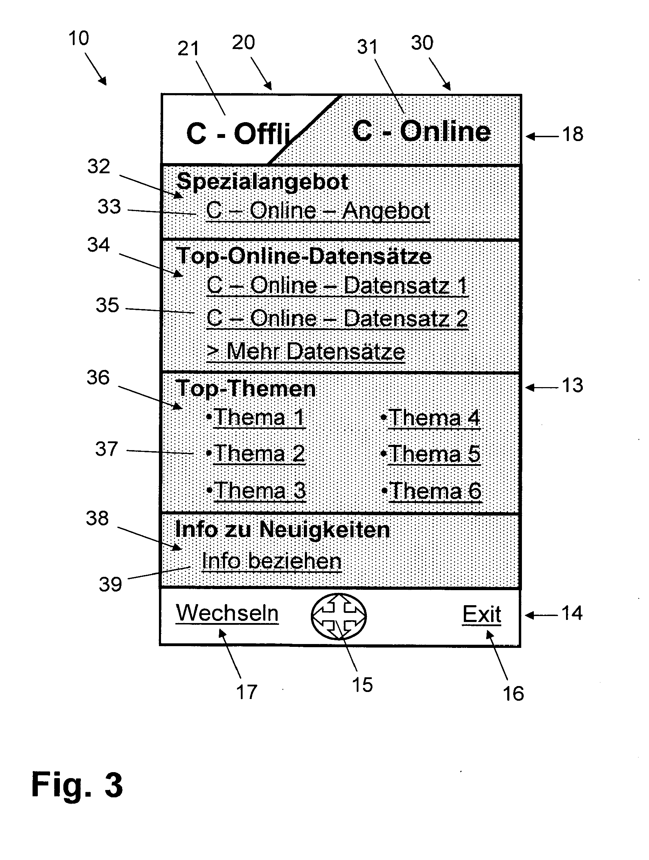

Sobald der Nutzer den Zugangstoken 12 für die Menüdatei C "Meine Spiele" aktiviert hat, wird automatisch in eine zweite Menüleiste 18 der Menü-Datenstruktur verzweigt, wie dies in den Figuren 2 und 3 dargestellt ist.

Gleichzeitig ändert sich auch die Darstellung der Anzeigeeinrichtung 10 ein wenig. Wiederum ist die Darstellungsfläche 13 zur Anzeige von Daten und dergleichen vorgesehen. Die Navigations-Menüleiste 14 umfasst nunmehr einen softwarebasierten Token 16 in Form eines Links "Exit" zum Verlassen einer Menüdatei, mittels dessen in die Ausgangssituation gemäß Figur 1 zurückgekehrt werden kann. Zusätzlich sind in der Navigations-Menüleiste 14 softwarebasierte Schaltmittel 17 in Form eines Links "Wechseln" vorgesehen, mittels derer zwischen Menüdatei-Unterstrukturen hin und her geschaltet werden kann.

Diese Menüdatei-Unterstrukturen werden im Folgenden anhand der Figuren 2 und 3 näher erläutert. Der Grundzweck des erfindungsgemäßen Verfahrens besteht darin, Informationsdaten in/auf einem Endgerät handhaben und darstellen zu können. Informationsdaten können grundsätzlich in beliebiger Form ausgebildet sein und beliebige Thematiken betreffen.

Die einzelnen Informationsdaten werden jeweils in einer Menüdatei abgelegt, wobei jeweils in einer Menüdatei abgelegte Informationsdaten einen Bezug zueinander aufweisen. Im vorliegenden Beispiel wurde die Menüdatei C "Meine Spiele" ausgewählt. Die in dieser Menüdatei C abgelegten Informationsdaten betreffen somit allesamt die Thematik "Spiele".

Damit der Nutzer das Verfahren besonders bequem und komfortabel nutzen kann, ist nunmehr vorgesehen, dass für die Menüdatei C "Meine Spiele" innerhalb der Daten-Menüstruktur zwei oder mehr Menüdatei-Unterstrukturen 20, 30, erzeugt werden und dass in den Menüdatei-Unterstrukturen 20, 30 jeweils unterschiedliche Typen von Informationsdaten abgelegt werden. Allerdings haben sämtliche Informationsdaten in den Menüdatei-Unterstrukturen 20, 30 einen Bezug zur eigentlichen Menüdatei C, hier zur Thematik "Spiele".

Wie in dem Ausführungsbeispiel dargestellt ist, umfasst die Menüdatei-Datenstruktur zunächst eine erste Menüleiste 11 (Figur 1). Weiterhin ist eine zweite Menüleiste 18 vorgesehen (Figuren 2 und 3), die im vorliegenden Beispiel der Menüdatei C "Meine Spiele" zugeordnet ist. In der ersten Menüleiste 11 ist ein Zugangstoken 12 zur Verzweigung in die der Menüdatei C zugeordnete zweite Menüleiste 18 vorgesehen. In der zweiten Menüleiste 18 sind ein Zugangstoken 21 zur Verzweigung in eine erste Menüdatei-Unterstruktur 20 sowie ein Zugangstoken 31 zur Verzweigung in eine zweite Menüdatei-Unterstruktur 30 vorgesehen.

In den Menüdatei-Unterstrukturen 20, 30 sind verschiedene Typen von Informationsdaten, die die Thematik "Spiele" betreffen, abgespeichert. In der ersten Menüdatei-Unterstruktur 20 gemäß Figur 2 sollen beispielsweise Informationsdaten 22 abgelegt sein, die in einer Speichereinrichtung des Endgeräts bereits abgespeichert sind. Bei diesen Informationsdaten 22 handelt es sich folglich um im Endgerät bereits abgespeicherte Datensätze, die auch als Offline-Daten bezeichnet werden. Hierbei kann es sich beispielsweise um bereits herunter geladene und im Endgerät abgespeicherte Spiele handeln, die vom Nutzer jederzeit auf seinem Endgerät betrieben werden können, ohne dass dieser mit dem Kommunikationsnetzwerk interagieren müsste.

Die Informationsdaten 22, bei denen es sich im vorliegenden Beispiel auch um jegliche Informationen rund um bestimmte Spiele handeln kann, werden auf der Darstellungsfläche 13 der Anzeigeeinrichtung 10 angezeigt. Im vorliegenden Beispiel wird nach der Verzweigung in die Menüdatei-Unterstruktur 20 mit den Offline-Inhalten zunächst eine Liste mit den gespeicherten Datensätzen angezeigt. Um auf möglichst geringem Raum der Darstellungsfläche 13 eine maximale Anzahl von Informationsdaten 22 darstellen zu können, ist vorgesehen, dass zu jedem Offline-Datensatz ein Aktivierungsmittel 23 in Form eines Links existiert. Bei Aktivierung der Menüdatei-Unterstruktur 20 wird zunächst eine Liste mit Links 23 zu den Informationsdaten 22 in Form von im Endgerät bereits gespeicherten Offline-Datensätzen angezeigt. Bei Aktivierung eines entsprechenden Links 23 wird dann der dazugehörige Offline-Datensatz aktiviert, beispielsweise ein Spiel, das der Nutzer anschließend auf seinem Endgerät spielen kann.

Um den Nutzer bequem und einfach mit zusätzlichen Informationsdaten zum Thema "Spiele" versorgen zu können, ist eine zweite Menüdatei-Unterstruktur 30 gemäß Figur 3 vorgesehen, in welcher Informationsdaten abgelegt werden, die vom Kommunikationsnetzwerk auf das Endgerät übertragen werden. Diese Informationsdaten werden als Online-Daten bezeichnet. Die Online-Daten werden vom Netzbetreiber vorzugsweise "Over The Air (OTA)" zum Endgerät des Nutzers übertragen.

Vorteil dieser Ausgestaltung ist, dass der Nutzer unter seiner Menüdatei C "Meine Spiele" auf einfache Weise sowohl seine Offline-Daten finden kann, die in der Menüdatei-Unterstruktur 20 abgespeichert sind, als auch vom Netzwerkbetreiber bereitgestellte Online-Daten, die in der Menüdatei-Unterstruktur 30 abgespeichert sind. Der Nutzer ist nicht mehr gezwungen, Online-Inhalte des Netzbetreibers über ein separates, in der Bedienung oft umständlich zu handhabendes Internetportal zu finden und zu beziehen. Vielmehr kann er ganz einfach die gewünschte Menüdatei c "Meine Spiele" aufrufen und dann über die Schaltmittel 17 bequem und einfach zwischen den einzelnen Menüdatei-Unterstrukturen 20, 30 hin und her schalten.

Die Menüdatei-Unterstruktur 30 mit den Online-Inhalten kann auf verschiedenste Art und Weise aufgebaut sein und die unterschiedlichsten Informationsdaten beinhalten. Nachfolgend wird hierzu anhand von Figur 3 ein exemplarisches Beispiel beschrieben. Beispielsweise können in einem Bereich der Darstellungsfläche 13 Informationsdaten 32 über ein Spezialangebot für ein bestimmtes Spiel vorgesehen sein. Vorteilhaft kann ein Aktivierungsmittel 33 in Form eines Links vorgesehen sein, bei dessen Aktivierung der Nutzer zu diesen Informationsdaten 32 über das Spezialangebot gelangt.

Die Übertragung dieser Informationsdaten sowie auch der nachfolgend beschriebenen Informationsdaten kann netzwerkseitig dynamisiert erfolgen, was bedeutet, dass der Netzwerkbetreiber diese Angebote verändern, anpassen und aktualisieren kann.

Im Beispiel erfolgt die Verbindung zu den eigentlichen Informationsdaten 32 über einen Link 33. Ebenso ist es möglich, dass neben dem Link 33 auch noch zusätzliche Vorabinformationen zu dem Spiel mit übertragen werden. Natürlich ist es auch möglich, dass gleich das gesamte Spiel beziehungsweise die Gesamtinformation übertragen wird. Wenn der Nutzer das Spiel spielen möchte, muss er dieses nur noch aktivieren. Sobald der Nutzer ein Spiel herunter geladen und für sein Endgerät aktiviert hat, kann er dieses in die Menüdatei-Unterstruktur 20 mit den bereits gespeicherten Datensätzen verschieben. Analoges gilt auch für die nachfolgend beschriebenen Informationsdaten.

In einem weiteren Bereich der Darstellungsfläche 13 können vom Netzbetreiber beispielsweise Informationsdaten 34 übertragen werden, die Auskunft über die derzeit erhältlichen Top-Spiele geben. Beispielsweise können wiederum geeignete Aktivierungsmittel 35 in Form von Links angezeigt werden, über die der Nutzer zu dem jeweiligen Spiel gelangt. Diese Liste der erhältlichen Spiele kann vom Netzbetreiber dynamisiert bereitgestellt und je nach Wunsch verändert werden.

In einer weiteren Rubrik könnte der Netzbetreiber beispielsweise auch Informationsdaten 36 anbieten und übertragen, die bestimmte Themen betreffen. Im vorliegenden Beispiel könnte es sich hierbei beispielsweise um bestimmte Genres und Typen von Spielen handeln. Durch Betätigung eines bestimmten Aktivierungsmittels 37 gelangt der Nutzer dann zu einem bestimmten Thema zum Komplex "Spiele".

Eine andere Art von Informationsdaten 38 könnte beispielsweise auch das Thema "Neuigkeiten" betreffen. Hier könnte beispielsweise ein Aktivierungsmittel 39 in Form eines Links bereitgestellt werden, bei dessen Aktivierung der Nutzer jeweils mit Informationen versorgt wird, wenn es Neuigkeiten zu einem bestimmten Spiel gibt, wenn ein neues Spiel verfügbar ist und dergleichen.

Die Art und Weise der übertragenen und dargestellten Online-Daten ist vielfältig und nicht auf bestimmte Anwendungen und Datentypen beschränkt. Durch die Verwendung mehrerer Bereiche in Form von Menüdatei-Unterstrukturen pro Menüdatei wird es für den Nutzer möglich, neben den bereits auf seinem Endgerät abgespeicherten Informationsdaten (Offline-Daten) auf einfache und komfortable Weise auch Zugriff auf entsprechende Online-Angebote des Netzwerkbetreibers Zugriff zu nehmen. Durch einfaches Hin- und Herschalten kann der Nutzer zwischen den Online-Daten und den Offline-Daten wechseln, was die Akzeptanz für Online-Daten erhöht. Der Netzbetreiber hat darüber hinaus die Möglichkeit, die Online-Daten dynamisiert und optional auch auf die Bedürfnisse des Nutzers angepasst zu übertragen, was die Akzeptanz noch weiter steigert.

### Bezugszeichenliste

- 10: Anzeigeeinrichtung eines Endgeräts
- 11: Erste Menüleiste
- 12: Zugangstoken zu einer Menüdatei
- 13: Darstellungsfläche der Anzeigeeinrichtung
- 14: Navigations-Menüleiste
- 15: Navigationsmittel
- 16: Token zum Verlassen einer Menüdatei
- 17: Schaltmittel zum Hin- und Herschalten zwischen Menüdatei-Unterstrukturen
- 18: Zweite Menüleiste
- 20: Menüdatei-Unterstruktur
- 21: Zugangstoken zur Menüdatei-Unterstruktur
- 22: Informationsdaten (Offline-Daten)
- 23: Aktivierungsmittel für die Informationsdaten (Link)
- 30: Menüdatei-Unterstruktur
- 31: Zugangstoken zur Menüdatei-Unterstruktur
- 32: Informationsdaten (Online-Daten)
- 33: Aktivierungsmittel für die Informationsdaten (Link)
- 34: Informationsdaten (Online-Daten)
- 35: Aktivierungsmittel für die Informationsdaten (Link)
- 36: Informationsdaten (Online-Daten)
- 37: Aktivierungsmittel für die Informationsdaten (Link)
- 38: Informationsdaten (Online-Daten)
- 39: Aktivierungsmittel für die Informationsdaten (Link)
- A: Menüdatei
- B: Menüdatei
- C: Menüdatei
- D: Menüdatei

## Patentansprüche

1. Verfahren zum Handhaben und Darstellen von Informationsdaten in/auf einem Endgerät, bei dem Informationsdaten in einer Speichereinrichtung des Endgeräts abgespeichert werden, bei dem Informationsdaten über wenigstens eine Schnittstelle zwischen einem Kommunikationsnetzwerk und dem Endgerät übertragen werden, bei dem im Endgerät eine Daten-Menüstruktur mit wenigstens einer Menüdatei implementiert ist, bei dem die Informationsdaten und/oder die Daten-Menüstruktur auf einer Anzeigeeinrichtung des Endgeräts angezeigt wird/werden, bei dem innerhalb der Daten-Menüstruktur über Navigationsmittel navigiert werden kann und bei dem die Informationsdaten in der wenigstens einen Menüdatei abgelegt werden/sind, wobei jeweils in einer Menüdatei abgelegte Informationsdaten einen Bezug zueinander aufweisen, **dadurch gekennzeichnet, dass** für wenigstens eine Menüdatei innerhalb der Daten-Menüstruktur zwei oder mehr Menüdatei-Unterstrukturen erzeugt werden und dass in den Menüdatei-Unterstrukturen jeweils unterschiedliche Typen von Informationsdaten abgelegt werden.

2. Verfahren nach Anspruch 1, **dadurch gekennzeichnet, dass** über Schaltmittel zwischen den einzelnen Menüdatei-Unterstrukturen einer Menüdatei hin und her geschaltet wird oder werden kann.

3. Verfahren nach Anspruch 1 oder 2, dass die Menü-Datenstruktur eine erste Menüleiste umfasst, in welcher wenigstens ein Zugangstoken zu der wenigstens einen Menüdatei und/oder den Menüdatei-Unterstrukturen wenigstens einer Menüdatei implementiert ist und dass über eine Aktivierung eines Zugangstokens in die damit verknüpfte Menüdatei beziehungsweise in die Menüdatei-Unterstrukturen verzweigt wird.

4. Verfahren nach einem der Ansprüche 1 bis 3, **dadurch gekennzeichnet, dass** bei Auswahl einer Menüdatei-Unterstruktur die darin abgelegten Informationsdaten auf der Anzeigeeinrichtung des Endgeräts angezeigt werden.

5. Verfahren nach einem der Ansprüche 1 bis 4, **dadurch gekennzeichnet, dass** in einer ersten Menüdatei-Unterstruktur der Menüdatei Informationsdaten abgelegt werden, die in einer Speichereinrichtung des Endgeräts abgespeichert sind (Offline-Daten).

6. Verfahren nach einem der Ansprüche 1 bis 5, **dadurch gekennzeichnet, dass** in einer zweiten Menüdatei-Unterstruktur der Menüdatei Informationsdaten abgelegt werden, die vom Kommunikationsnetzwerk über die wenigstens eine Schnittstelle auf das Endgerät übertragen werden (Online-Daten).

7. Endgerät für die Verwendung mit einem Kommunikationsnetzwerk, mit einer Anzeigeeinrichtung (10), einer Speichereinrichtung zum Abspeichern von Informationsdaten (22, 32, 34, 36, 38) und mit wenigstens einer Schnittstelle zum Übertragen von Informationsdaten zwischen einem Kommunikationsnetzwerk und dem Endgerät, wobei im Endgerät eine Daten-Menüstruktur mit wenigstens einer Menüdatei (A, B, C, D) implementiert ist, wobei die Informationsdaten (22, 32, 34, 36, 38) in der wenigstens einen Menüdatei (A, B, C, D) abgespeichert sind, wobei jeweils in einer Menüdatei abgelegte Informationsdaten einen Bezug zueinander aufweisen und wobei Mittel (15) zum Navigieren innerhalb der Daten-Menüstruktur vorgesehen sind, **dadurch gekennzeichnet, dass** wenigstens eine Menüdatei (C) zwei oder mehr Menüdatei-Unterstrukturen (20, 30) aufweist und dass in den Menüdatei-Unterstrukturen (20, 30) jeweils unterschiedliche Informationsdatentypen abgelegt sind.

8. Endgerät nach Anspruch 7, **dadurch gekennzeichnet, dass** Mittel (17) zum Hin- und Herschalten zwischen den Menüdatei-Unterstrukturen (20, 30) vorgesehen sind.

9. Endgerät nach Anspruch 7 oder 8, **dadurch gekennzeichnet, dass** die Menü-Datenstruktur eine erste Menüleiste (11) umfasst, in welcher wenigstens ein Zugangstoken (12) zur Verzweigung in die wenigstens eine Menüdatei (A, B, C, D) und/oder in eine Menüdatei-Unterstruktur (20, 30) implementiert ist.

10. Endgerät nach einem der Ansprüche 7 bis 9, **dadurch gekennzeichnet, dass** die Menüdatei-Datenstruktur eine erste Menüleiste (11) sowie wenigstens eine zweite, einer bestimmten Menüdatei (A, B, C, D) zugeordnete Menüleiste (18) umfasst, dass in der ersten Menüleiste (11) wenigstens ein Zugangstoken (12) zur Verzweigung in eine einer Menüdatei (A, B, C, D) zugeordneten zweiten Menüleiste (18) implementiert ist und dass in der zweiten Menüleiste (18) wenigstens ein Zugangstoken (21, 31) zur Verzweigung in eine Menüdatei-Unterstruktur (20, 30) der Menüdatei implementiert ist.

11. Endgerät nach einem der Ansprüche 7 bis 10, **dadurch gekennzeichnet, dass** in einer ersten Menüdatei-Unterstruktur (20) der Menüdatei Informationsdaten (22) abgelegt sind, die in einer Speichereinrichtung des Endgeräts abgespeichert sind (Offline-Daten).

12. Endgerät nach einem der Ansprüche 7 bis 11, **dadurch gekennzeichnet, dass** in einer zweiten Menüdatei-Unterstruktur (30) der Menüdatei vom Kommunikationsnetzwerk über die wenigstens eine Schnittstelle auf das Endgerät übertragene Informationsdaten (32, 34, 36, 38) abgelegt sind (Online-Daten).

13. System zum Handhaben von Informationsdaten, aufweisend ein Kommunikationsnetzwerk, wobei netzwerkseitig wenigstens eine zentrale Rechnereinheit vorgesehen ist, sowie wenigstens ein Endgerät nach einem der Ansprüche 7 bis 12, wobei wenigstens eine Schnittstelle zur Übertragung von Daten zwischen der wenigstens einen zentralen Rechnereinheit und dem wenigstens einen Endgerät vorgesehen ist.
